# EUROPEAN PATENT SPECIFICATION

(11) **EP 4 058 343 B1**
(45) Date of publication and mention of the grant of the patent: **10.05.2023**
(21) Application number: 19816453.5
(22) Date of filing: 13.11.2019
(51) Int. Cl.: B62K 11/04, B62K 19/12, B62K 19/24, B62J 1/08, B62J 1/12

(54) **A SEAT-SUPPORTING STRUCTURE FOR MOUNTING ON A MOTORCYCLE FRAME**
SITZTRAGSTRUKTUR ZUR MONTAGE AN EINEM MOTORRADRAHMEN
STRUCTURE DE SUPPORT DE SIÈGE À MONTER SUR UN CADRE DE MOTOCYCLETTE

(43) Date of publication of application: 21.09.2022
(73) Proprietor: Zapp Electric Vehicles Limited, London NW9 6BX (GB)
(72) Inventor: CHATSUWAN, Swin, London NW9 6BX (GB); THANATHAWEE, Warin, London NW9 6BX (GB); MUNPRASIT, Namkarn, London NW9 6BX (GB)
(74) Representative: Patentanwaltskanzlei Matschnig & Forsthuber OG
(86) International application number: PCT/IB2019/059729
(87) International publication number: WO 2021/094813

(56) References cited:
- EP-A1- 1 681 197
- EP-A2- 1 481 881
- CN-Y- 2 252 760
- JP-A- 2003 127 964
- JP-B2- 4 108 222
- US-A- 2 194 103
- US-A1- 2015 075 888

## Description

### FIELD OF INVENTION

The present invention relates to a seat-supporting structure for mounting on a motorcycle frame.

### BACKGROUND OF THE INVENTION

It is known that a seat-supporting structure for mounting on a motorcycle frame is constructed and connected firmly with the motorcycle frame using multiple connected tubes and welding points, as disclosed in Chinese Patent Publication No. CN 105905213 A, hereinafter called a prior art.

A key requirement of the seat-supporting structure is its strength to withstand against a force that would cause the deformation of itself, for example, stress from a load on the seat and vibration while the motorcycle is in motion. In view of the known arts, the seat-supporting structure is constructed of multiple connected tubes to meet such requirement. However, the practice of such known arts normally requires multiple bending and welding steps performed in sequence, with each step prone to both human and machine errors. Accordingly, a high number of defects can be expected.

In addition, by constructing the seat-supporting structure using multiple connected tubes which are heavy by nature, the motorcycle frame becomes heavy and thus more power is required to propel the motorcycle.

Therefore, the development of a seat-supporting structure for mounting on a motorcycle frame that provides ease of fabrication without compromising the strength of the seat-supporting structure against the force that would cause the deformation of the seat-supporting structure while the motorcycle is in motion and also reduces the weight of the seat-supporting structure to lower power consumption is required.

### CITATION LIST

### Patent Literature

PTL 1: Chinese Patent Publication No. CN 105905213 A

Document JP 2003 127964 A discloses the preamble of claim 1.

### SUMMARY OF THE INVENTION

It is an object of the present invention to provide a seat-supporting structure for mounting on a motorcycle frame, which provides ease of fabrication without compromising the strength of the seat-supporting structure against the force that would cause the deformation of the seat-supporting structure while the motorcycle is in motion and also reduces the weight of the seat-supporting structure to lower power consumption.

In order to achieve the above object, an embodiment of the present invention provides a seat-supporting structure for mounting on a motorcycle frame having a main skeleton. Said seat-supporting structure comprises two load-bearing structures positioned under a seat of said motorcycle frame to support a load on the seat. Each of said load-bearing structures includes a base portion, a middle portion, and a top portion. Said base portion is located at the bottom of said load-bearing structure and has a branch portion and a frame-mounting portion, wherein such branch portion extends upward in a diagonally backward direction and such frame-mounting portion is mounted on the main skeleton. The middle portion extends from the branch portion of the base portion upward in a diagonally forward direction. And the top portion extends from an upper part of the middle portion upward in a diagonally backward direction to receive the load. Each of said load-bearing structures includes multiple openings and ribs so as to resist stress from the load and vibration while the motorcycle is in motion.

According to an embodiment of the present invention, since each of the load-bearing structures in a zig-zag shape is fabricated in a single mold and is detachable from the motorcycle frame, it is possible to provide ease of fabrication.

Moreover, since some material on the load-bearing structure is absent at the openings and some material is present at the ribs to resist the stress, an embodiment is capable of reducing its own weight without compromising the strength of the seat-supporting structure to withstand the force that would cause the deformation of the seat-supporting structure while the motorcycle is in motion.

In the seat-supporting structure for mounting on the motorcycle frame of an embodiment of the present invention, the load-bearing structure includes a first bending portion which is formed between the top portion and the middle portion and a second bending portion which is formed between the middle portion and the branch portion of the base portion.

According to an embodiment of the present invention, since there are two bending portions on the load-bearing structure, it is possible to use these two bending portions to perform as stress-resilient portions to accumulate and resist the stress distributed along the ribs and transmitted to both bending portions.

In the seat-supporting structure for mounting on the motorcycle frame per an embodiment of the present invention, the load-bearing structure has a first unopened portion formed at the rearward position of the first bending portion, and a second unopened portion formed at the forward position of the second bending portion.

According to an embodiment of the present invention, since the material is present at the first unopened portion or the second unopened portion, it is possible for these two unopened portions to be "reservoirs" of the stress transmitted to both bending portions.

In the seat-supporting structure for mounting on the motorcycle frame per an embodiment of the present invention, at least one of the load-bearing structures is attached to a cover. Optionally, the cover is integral to the load-bearing structure.

According to an embodiment of the present invention, the cover provides additional strength and protect the openings and ribs from erosion caused by weathering and/or unintended engagement with a foreign object. In an optional embodiment that the cover is integral to the load-bearing structure, the seal between the cover and the load-bearing structure is maximized.

In the seat-supporting structure for mounting on the motorcycle frame per an embodiment of the present invention, the frame-mounting portion has at least a clamp to mount on the main skeleton.

According to an embodiment of the present invention, the clamp is to engagingly mount and attach the load-bearing structure on the horizontal tube of the main skeleton.

In the seat-supporting structure for mounting on the motorcycle frame per an embodiment of the present invention, the load-bearing structure is made of rigid material, for example, aluminum alloy.

According to an embodiment of the present invention, since the material of the load-bearing structure is rigid, it is possible for the load-bearing structure to withstand the force of deformation of the seat-supporting structure while the motorcycle is in motion.

In the seat-supporting structure for mounting on the motorcycle frame per an embodiment of the present invention, the seat-supporting structure further comprises a seat support bar connected between the load-bearing structures. Optionally, the seat-supporting structure further comprises a suspension bar connected between the load-bearing structures. Optionally, the seat support bar has two ends that are connected between the load-bearing structures at the first bending portions. And optionally, the suspension bar has two ends that are connected between the load-bearing structures at the middle portions.

According to an embodiment of the present invention, the seat support bar and/or the suspension bar is so connected between the load-bearing structures so as to maintain the spacing between two load-bearing structures, as well as to provide additional strength to the seat-supporting structure.

In the seat-supporting structure for mounting on the motorcycle frame per an embodiment of the present invention, the motorcycle frame has the main skeleton, wherein such main skeleton comprises a vertical tube and two horizontal tubes, and wherein the horizontal tubes are connected to the vertical tube so as to provide a location upon which the seat-supporting structure is mounted.

According to an embodiment of the present invention, the main skeleton is constructed using only few connected tubes having few bent and welded locations, which in turn reduces the number of working steps and chance of defects during the manufacturing process. Such simplified configuration of the main skeleton is enabled by the load-bearing structures which require few locations for mounting upon the main skeleton, in particular upon only the horizontal tubes.

### BRIEF DESCRIPTION OF DRAWINGS

The principle of the present invention and its advantages will become apparent in the following description, taking into consideration the accompanying drawings in which:
FIG. 1 is a perspective view of an electric motorcycle in accordance with an embodiment.
FIG. 2 is a perspective view of a motorcycle frame mounted with a seat-supporting structure in accordance with an embodiment.
FIG. 3 is an exploded view of a motorcycle frame mounted with a seat-supporting structure in accordance with an embodiment.
FIG. 4 is an explanation view of a load-bearing structure in accordance with an embodiment.

### DETAILED DESCTIPTION OF EMBODIMENTS OF THE INVENTION

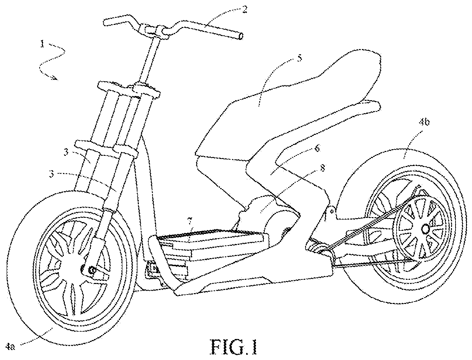

Hereinafter, an embodiment of the present invention will be described in detail with reference to FIG. 1 to FIG. 4.

FIG. 1 is a perspective view of an electric motorcycle 1. The electric motorcycle 1 comprises a handle 2, two prongs 3, a front wheel 4a, a rear wheel 4b, a seat 5, a cover 6, two batteries 7, and a motor 8. While the electric motorcycle 1 is in motion, the handle 2 is manipulated to control the steering via the two prongs 3, thus it changes the direction of the front wheel 4a and the rear wheel 4b. Passengers sit on the seat 5, which is located above the cover 6 and the motor 8 driven by two batteries 7.

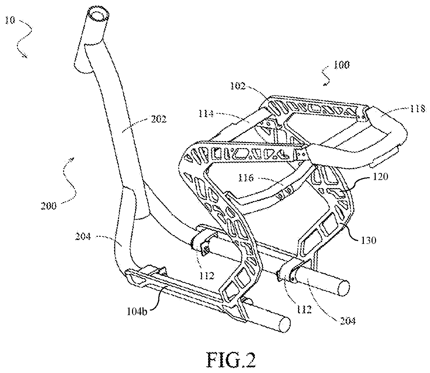

FIG. 2 is a perspective view of a motorcycle frame 10 which belongs to the electric motorcycle 1. The motorcycle frame 10 comprises a main skeleton 200 upon which a seat-supporting structure 100 is mounted to receive vibration while the motorcycle 1 is in motion. The seat-supporting structure 100 is also located under the seat 5 of the motorcycle frame 10 to support the seat 5 and withstand the load.

As shown in FIG. 2, the seat-supporting structure 100 comprises two load-bearing structures 102, frame mounting portions 104b, a seat support bar 114, a suspension bar 116, and a seat end holder 118.

Each load-bearing structure 102 is arranged to support the seat 5 and be mounted on the main skeleton 200 using two frame mounting portions 104b. The seat support bar 114 is installed under the seat 5 to maintain the spacing between two load-bearing structures 102. The suspension bar 116 is used to maintain the spacing between two load-bearing structures 102 at the position lower than that of the seat support bar 114. The seat support bar 114 and the suspension bar 116 also provide additional strength to the seat-supporting structure 100. The seat end holder 118 is attached at the end of the seat 5 for a pillion passenger to hold.

By fabricating each element of the seat-supporting structure 100 part by part and assembling all the elements altogether, it is possible for the seat-supporting structure 100 to provide ease of fabrication.

As also shown in FIG. 2, the main skeleton 200 is constructed using a vertical tube 202 and two horizontal tubes 204.

The top of the vertical tube 202 is used for providing the location for the installation of the handle 2, whereas the bottom of the vertical tube 202 is connected to two horizontal tubes 204. The two horizontal tubes 204 provides the location upon which the seat-supporting structures 100 is mounted. In this embodiment, each of the horizontal tubes 204 has one end that is bent in a diagonally upward direction so as to connect with the vertical tube 202. In an alternative embodiment (not shown), each of the horizontal tubes 204 has one end that is connected to another tube extending in a diagonally upward direction so as to provide a connection between the horizontal tube 204 and the vertical tube 202, albeit this embodiment is less preferred because it entails more number of components and locations of adhesion/ welding. In yet another alternative embodiment (not shown), the horizontal tube 204 is configured to have a U-shape so that only one horizontal tube is needed to connect with one end of the vertical tube 202 and provide a location upon which the seat-supporting structures 100 is mounted. It is now apparent that a skilled person may exercise their normal skill to modify these minor configurations of and connection between the vertical tube 202 and the horizontal tubes 204 (or variants thereof) to achieve the same effects and results without deviating from the concept of the present invention.

According to the embodiment shown in FIG. 2, the main skeleton 200 is constructed using only few connected tubes having few bent and welded locations, which in turn reduces the number of working steps and chance of defects during the manufacturing process. Such simplified configuration of the main skeleton 200 is enabled by the load-bearing structures 102 which require few locations for mounting upon the main skeleton 200, in particular upon only the horizontal tubes 204.

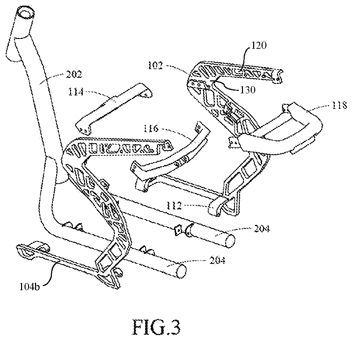

FIG. 3 is an exploded view of the motorcycle frame 10. By revealing each element from FIG.2 part by part, it is possible to show how the motorcycle frame 10 is assembled.

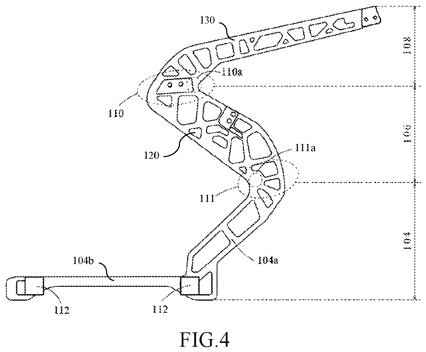

FIG. 4 is an explanation view of the load-bearing structure 102. Each load-bearing structure 102 is fabricated in a single mold, with 15 mm in thickness using a rigid material, such as aluminum alloy, and is formed by three portions; a base portion 104, a middle portion 106, and a top portion 108.

As shown in FIG. 4, the base portion 104 is located at the bottom of the load-bearing structure 102. The base portion 104 comprises a branch portion 104a and a frame-mounting portion 104b, wherein such branch portion 104a extends upward in a diagonally backward direction to the middle portion 106 and such frame-mounting portion 104b is mounted on the main skeleton 200 (not shown). The middle portion 106 extends, from the branch portion 104a of the base portion 104, upward in a diagonally forward direction. The top portion 108 extends, from an upper part of the middle portion 106, upward in a diagonally backward direction.

The frame-mounting portion 104b includes at least one clamp 112, to engagingly mount and attach the load-bearing structure 102 on the horizontal tube 204 of the main skeleton 200 (not shown). With these clamps 112, both load-bearing structures 102 are detachable from the main skeleton 200. Preferably, the number of clamp(s) 112 per base portion 104 is two. A skilled person may exercise their normal skill to modify, for example, one clamp 112 per base portion 104 having a larger mounting surface, or three clamps 112 per base portion 104, each having a smaller mounting surface, to achieve the effect and results similar to the means of mounting (or variants thereof) that has been previously described, without deviating from the concept of the present invention.

As a result, the load-bearing structure 102 is configured in a zig-zag shape with two bending portions. A first bending portion 110 is formed between the top portion 108 and the middle portion 106; a second bending portion 111 is formed between the middle portion 106 and the branch portion 104a of the base portion 104.

At both bending portions 110 and 111, a first unopened portion 110a and a second unopened portion 111a are formed at the rearward position of the first bending portion 110, and at the forward position of the second bending portion 111, respectively.

Moreover, both load-bearing structures 102 include the same pattern of multiple openings 120 and ribs 130. Openings 120 are the portions where the material is absent, whereas ribs 130 are the portions where the material is present. In this embodiment, the shapes and positions of openings 120 and ribs 130 are non-uniform.

Therefore, by providing such partial absence of rigid material such as aluminum alloy, it is possible to reduce the weight of the load-bearing structures 102 without compromising the strength of the seat-supporting structure 100. Thus, the motorcycle 1 requires lower power to drive.

In this embodiment, the load-bearing structure 102 comprises the cover 6 (shown earlier in FIG. 1; omitted in FIG. 4) to provide additional strength and protect the openings 120 and ribs 130 from erosion caused by weathering and/or unintended engagement with a foreign object. In this embodiment, the liquid/molten rigid material is injected into a single mold to form the cover 6 that is integral to the load-bearing structure 102 so as to maximize the seal between the cover 6 and the load-bearing structure 102. Alternatively, the ribs 130 and openings 120 of the load-bearing structure 102 may be formed separately from the cover 6, for example by blanking a plain plate of rigid material having a predetermined shape. The load-bearing structure 102 formed by such alternative method may be fastened to the cover 6 by any known means, including welding, adhesive, and screwing.

Next, the operation of the load-bearing structure 102 while the motorcycle 1 is in motion with reference to FIG. 2 and FIG. 4 will be provided.

While the motorcycle 1 is in motion, it is expected to encounter unfavorable road conditions such as uneven road surfaces, bumps, or potholes, from time to time.

In such situations, extra forces will be exerted on the seat-supporting structure 100 from the load, caused by the weight of passengers and vibration or sudden vertical acceleration from passing through such unfavorable road conditions.

When these forces are exerted on each load-bearing structure 102, which has the zig-zag shape and includes multiple openings 120 and ribs 130, the stress in the structure is distributed along the ribs 130 and transmitted to the first bending portion 110 and the second bending portion 111. These bending portions 110 and 111 act as stress-resilient sections to accumulate and resist the stress at the first unopened portion 110a and the second unopened portion 111a.

With the unopened portions 110a acting as "reservoirs" of the stress, both load-bearing structures 102 together are capable of withstanding the load of as high as 600 kg (approximately 6,000 N), which is four times the weight of two passengers, each of whom is assumed to weigh 75kg, simultaneously with vibrations/sudden vertical acceleration caused by uneven road surfaces such as potholes or road bumps up to three times of gravitational pull.

As a result, the seat-supporting structure 100 for mounting on the motorcycle frame 10 can provide ease of fabrication without compromising the strength of the seat-supporting structure 100 against the force that would cause the deformation of the seat-supporting structure 100 while the motorcycle 1 is in motion and also can reduce the weight of the seat-supporting structure 100.

Although specific embodiments of the invention have been disclosed and described as well as illustrated in the accompanying drawings, they are simply for the purpose of better understanding of the present invention, and not a limitation of the scope of the present invention. Adaption and modification of various structures, such as designs or materials of embodiments, mounting mechanisms of various parts and elements or embodiments, are possible and apparent to a skilled person without departing from the scope of the present invention, which is determined by the claims

### List of References:

- 1: electric motorcycle
- 2: handle
- 3: prong
- 4a: front wheel
- 4b: rear wheel
- 5: seat
- 6: cover
- 7: battery
- 8: motor
- 10: motorcycle frame
- 100: seat-supporting structure
- 102: load-bearing structure
- 104: base portion
- 104a: branch portion
- 104b: frame-mounting portion
- 106: middle portion
- 108: top portion
- 110: first bending portion
- 110a: first unopened portion
- 111: second bending portion
- 111a: second unopened portion
- 112: clamp
- 114: seat support bar
- 116: suspension bar
- 118: seat end holder
- 120: opening
- 130: rib
- 200: main skeleton
- 202: vertical tube
- 204: horizontal tube

## Claims

1. A seat-supporting structure (100), for mounting on a motorcycle frame (10) having a main skeleton (200), the seat-supporting structure (100) comprising:
two load-bearing structures (102) configured to be positioned under a seat (5) of said motorcycle frame (10) to support a load on the seat (5) of said motorcycle frame (10),
each of said load-bearing structures (102) including
a base portion (104) located at the bottom of said load-bearing structure (102), having a branch portion (104a) and a frame-mounting portion (104b), wherein said branch portion (104a) extends upward in a diagonally backward direction and said frame-mounting portion (104b) is configured to be mounted on the main skeleton (200),
a middle portion (106) which extends, from the branch portion (104a) of the base portion (104), upward in a diagonally forward direction, and
a top portion (108) which extends, from an upper part of the middle portion (106), upward in a diagonally backward direction to receive the load,
**characterised in that**
each of said load-bearing structures (102) includes multiple openings (120) and ribs (130) so as to resist stress from the load and vibration while the motorcycle (1) is in motion.

2. The seat-supporting structure (100) of Claim 1, wherein the load-bearing structure (102) includes a first bending portion (110) which is formed between the top portion (108) and the middle portion (106) and a second bending portion (111) which is formed between the middle portion (106) and the branch portion (104a) of the base portion (104).

3. The seat-supporting structure (100) of Claim 2, wherein a first unopened portion (110a) is formed at the rearward position of the first bending portion (110) and a second unopened portion (111a) is formed at the forward position of the second bending portion (111).

4. The seat-supporting structure (100) of any one of Claims 1 to 3, further comprising a cover (6) wherein at least one of the load-bearing structures (102) is attached to the cover (6).

5. The seat-supporting structure (100) of Claim 4, wherein the cover (6) is integral to the load-bearing structure (102).

6. The seat-supporting structure (100) of any one of Claims 1 to 5, wherein the frame-mounting portion (104b) has at least a clamp (112) to mount the seat-supporting structure (100) on the main skeleton (200).

7. The seat-supporting structure (100) of any one of Claims 1 to 6, wherein the load-bearing structures (102) are made of rigid material.

8. The seat-supporting structure (100) of any one of Claims 1 to 7, further comprising a seat support bar (114) connected between the load-bearing structures (102).

9. The seat-supporting structure (100) of Claim 8, wherein the seat support bar (114) has two ends that are connected between the load-bearing structures (102) at the first bending portions (110).

10. The seat-supporting structure (100) of any one of Claims 1 to 9, further comprising a suspension bar (116) connected between the load-bearing structures (102).

11. The seat-supporting structure (100) of Claim 10, wherein the suspension bar (116) has two ends that are connected between the load-bearing structures (102) at the middle portions (106).

## Patentansprüche

1. Sitztragende Struktur (100) zur Montage an einem Motorradrahmen (10) mit einem Hauptgerüst (200), wobei die sitztragende Struktur (100) aufweist:
zwei tragende Strukturen (102), die unter einem Sitz (5) des Motorradrahmens (10) positionierbar zum Halten einer Last auf dem Sitz (5) des Motorradrahmens (10) eingerichtet sind, wobei jede der tragenden Strukturen (102)
einen am Unterteil der tragenden Struktur (102) positionierten Basisbereich (104) mit einem Verzweigungsbereich (104a) und einem Rahmenbefestigungsbereich (104b), wobei der Verzweigungsbereich (104a) in einer diagonal nach hinten verlaufenden Richtung nach oben verläuft und der Rahmenbefestigungsbereich (104b) zur Befestigung an dem Hauptgerüst (200) eingerichtet ist,
einen Mittelbereich (106), der von dem Verzweigungsbereich (104a) des Basisbereichs (104) in einer diagonalen Vorwärtsrichtung nach oben verläuft, und
einen oberen Bereich (108), der von einem oberen Teil des Mittelbereichs (106) nach oben in einer diagonalen Rückwärtsrichtung zum Aufnehmen der Last verläuft,
beinhaltet,
**dadurch gekennzeichnet, dass**
jede der tragenden Strukturen (102) mehrere Öffnungen (120) und Rippen (130) aufweist, um der Belastung durch die Last und der Vibration zu widerstehen, während das Motorrad (1) in Bewegung ist.

2. Sitztragende Struktur (100) nach Anspruch 1, wobei die tragende Struktur (102) einen ersten Krümmungsbereich (110), der zwischen dem oberen Bereich (108) und dem Mittelbereich (106) ausgebildet ist, und einen zweiten Krümmungsbereich (111), der zwischen dem Mittelbereich (106) und dem Verzweigungsbereich (104a) des Basisbereichs (104) ausgebildet ist, beinhaltet.

3. Sitztragende Struktur (100) nach Anspruch 2, wobei ein erster ungeöffneter Abschnitt (110a) an der rückwärtigen Position des ersten Krümmungsbereichs (110) und ein zweiter ungeöffneter Abschnitt (111a) an der vorderen Position des zweiten Krümmungsbereichs (111) ausgebildet ist.

4. Sitztragende Struktur (100) nach einem der Ansprüche 1 bis 3, zudem mit einer Abdeckung (6), wobei zumindest eine der tragenden Strukturen (102) an der Abdeckung (6) befestigt ist.

5. Sitztragende Struktur (100) nach Anspruch 4, wobei die Abdeckung (6) einstückig mit der tragenden Struktur (102) ist.

6. Sitztragende Struktur (100) nach einem der Ansprüche 1 bis 5, wobei der Rahmenbefestigungsbereich (104b) zumindest eine Klammer (112) zum Anbringen der sitztragenden Struktur (100) an dem Hauptgerüst (200) aufweist.

7. Sitztragende Struktur (100) nach einem der Ansprüche 1 bis 6, wobei die tragenden Strukturen (102) aus starrem Material bestehen.

8. Sitztragende Struktur (100) nach einem der Ansprüche 1 bis 7, zudem mit einer zwischen den tragenden Strukturen (102) angekoppelte Sitzstützstange (114).

9. Sitztragende Struktur (100) nach Anspruch 8, wobei die sitztragende Stange (114) zwei Enden hat, die zwischen den tragenden Strukturen (102) an den ersten Krümmungsbereichen (110) angekoppelt sind.

10. Sitztragende Struktur (100) nach einem der Ansprüche 1 bis 9, zudem mit einer zwischen den tragenden Strukturen (102) angekoppelten Aufhängestange (116).

11. Sitztragende Struktur (100) nach Anspruch 10, wobei die Aufhängestange (116) zwei Enden hat, die zwischen den tragenden Strukturen (102) an den Mittelbereichen (110) angekoppelt sind.

## Revendications

1. Structure de support de siège (100), destinée à être montée sur un cadre de moto (10) ayant une carcasse principal (200), la structure de support de siège (100) comportant :
deux structures porteuses (102) configurées pour être positionnées sous un siège (5) dudit cadre de moto (10) afin de supporter une charge sur le siège (5) dudit cadre de moto (10), chacune de ces structures porteuses (102) contenant
une partie de base (104) située au bas de ladite structure porteuse (102), ayant une partie de branche (104a) et une partie de montage de cadre (104b), ladite partie de branche (104a) s'étendant vers le haut dans une direction diagonale vers l'arrière et ladite partie de montage de cadre (104b) étant configurée pour être montée sur la carcasse principal (200),
une partie centrale (106) qui s'étend à partir de la branche (104a) de la partie de base (104) vers le haut dans une direction diagonale vers l'avant, et
une partie supérieure (108) qui s'étend à partir d'une partie supérieure de la partie centrale (106) vers le haut dans une direction diagonale vers l'arrière pour recevoir la charge,
**caractérisée en ce que**
chacune desdits structures porteuses (102) comprend plusieurs ouvertures (120) et nervures (130) de manière à résister à la contrainte de la charge et aux vibrations lorsque la motocyclette (1) est en mouvement.

2. Structure de support de siège (100) de la revendication 1, dans laquelle la structure porteuse (102) comprend une première partie de flexion (110) qui est formée entre la partie supérieure (108) et la partie centrale (106) et une deuxième partie de flexion (111) qui est formée entre la partie centrale (106) et la partie de branche (104a) de la partie de base (104).

3. Structure de support de siège (100) de la revendication 2, dans laquelle une première partie non ouverte (110a) est formée à la position arrière de la première partie de flexion (110) et une deuxième partie non ouverte (111a) est formée à la position avant de la deuxième partie de flexion (111).

4. Structure de support de siège (100) de l'une quelconque des revendications 1 à 3, comportant en outre un couvercle (6), au moins une des structures porteuses (102) étant fixée au couvercle (6).

5. Structure de support de siège (100) de la revendication 4, dans laquelle le couvercle (6) est intégral à la structure porteuse (102).

6. Structure de support de siège (100) de l'une quelconque des revendications 1 à 5, dans laquelle la partie de montage du cadre (104b) comporte au moins une pince (112) pour monter la structure de support de siège (100) sur la carcasse principal (200).

7. Structure de support de siège (100) de l'une des revendications 1 à 6, dans laquelle les structures porteuses (102) sont faites en un matériau rigide.

8. Structure de support de siège (100) de l'une quelconque des revendications 1 à 7, comprenant en outre une barre de support de siège (114) reliée entre les structures porteuses (102).

9. Structure de support de siège (100) de la revendication 8, dans laquelle la barre de support de siège (114) a deux extrémités qui sont reliées entre les structures porteuses (102) au niveau des premières parties de flexion (110).

10. Structure de support de siège (100) de l'une quelconque des revendications 1 à 9, comprenant en outre une barre de suspension (116) reliée entre les structures porteuses (102).

11. Structure de support de siège (100) de la revendications 10, dans laquelle la barre de suspension (116) a deux extrémités qui sont reliées entre les structures porteuses (102) au niveau des parties centrales (106).
